# EUROPEAN PATENT APPLICATION

(11) **EP 0 928 001 A1**
(43) Date of publication of application: **07.07.1999**
(21) Application number: 98500261.7
(22) Date of filing: 02.12.1998
(51) Int. Cl.: G11B 33/04

(54) **Case for DVD video disks**

(30) Priority: 31.12.1997 ES 9702729
(71) Applicant: Lopez Mas, Antonia, 08017 Barcelona (ES)
(72) Inventor: Lopez Mas, Antonia, 08017 Barcelona (ES)
(74) Representative: Renter Llenas, Maria

(57) **Abstract**

The case is formed by two square, very flat parallelepiped halves, articulated together, so that both halves forming the case have on their inside faces the means for centring and holding a DVD video disk each, complemented by nerves for the centring on the edge of the disks mounted on each one of them, with the said smaller face having holding means arranged along its inside used for holding down an explanatory brochure.

## Description

The present invention is intended to describe a DVD video disk case which provides original construction features, from which derive clear characteristics of novelty and inventive step.

Digital disks for video are known by the initials of DVD, which correspond to the name "Digital Video Disk", which is the generic name used in this branch of industry.

DVD video disk cases have been widely spread by the ever more extensive use thereof, both for playing music and for reproducing videos.

At the present time, the trading of the aforementioned disks takes place using cases with a practically standardised structure which have a very flat parallelepiped form in a noticeably square shape, made up by a container portion and cover articulated to each other, which for the case of the disks often includes the formation of a single assembly made in a single mould operation with the case assembly being formed by a container portion and cover articulated to each other and worked between each other by a smaller side which forms a type of "shelfback" for the case. Inside the case a DVD video disk and an information brochure are inserted for the disk itself, as well as eventually other printed materials that may form the so-called sleeves for the case.

The cases known at present accept a single DVD video disk inside, having the centring devices and means for attaching the said disk. Usually the axial means for holding down the disk is formed by the centre holder or central rosette like protrusion which has elastic characteristics.

The objective of the present invention consists in describing a case for DVD video disks in which it is made possible to fit two disks into a single case, thereby doubling the capacity of the case, making the selling and the use of the disks easier.

In order to achieve its objectives, the present invention envisages the formation of two centre rosette like protrusions on the inner faces of the two articulated elements which make up the case, that is to say, the case and the cover thereof, the arrangement being completed with nerves in the form of circular sectors which are concentric with the rosette like protrusions, having a stepped transversal shape in order to accept the edges of the respective disks. In this way, it makes it possible to fit in a DVD video disk on each one of the two elements that form the case, and they will be well held in place by the respective central protrusions and centred around the edges by the set of reception sectors for the edges of the disks.

The specific structure for the central protrusions and the number of reception sectors for the edges of the disks may be variable within certain limits, providing that they may allow the objective of the present invention to be achieved.

The case shall also present in the part joining the case and the cover thereof, that is to say, in the part that forms the "shelfback" of the case, some central tabs for holding an information brochure or similar material in place.

The invention will be further explained in detail in the following according to a preferred embodiment on the basis of the following drawings, which are exclusively by way of an example.

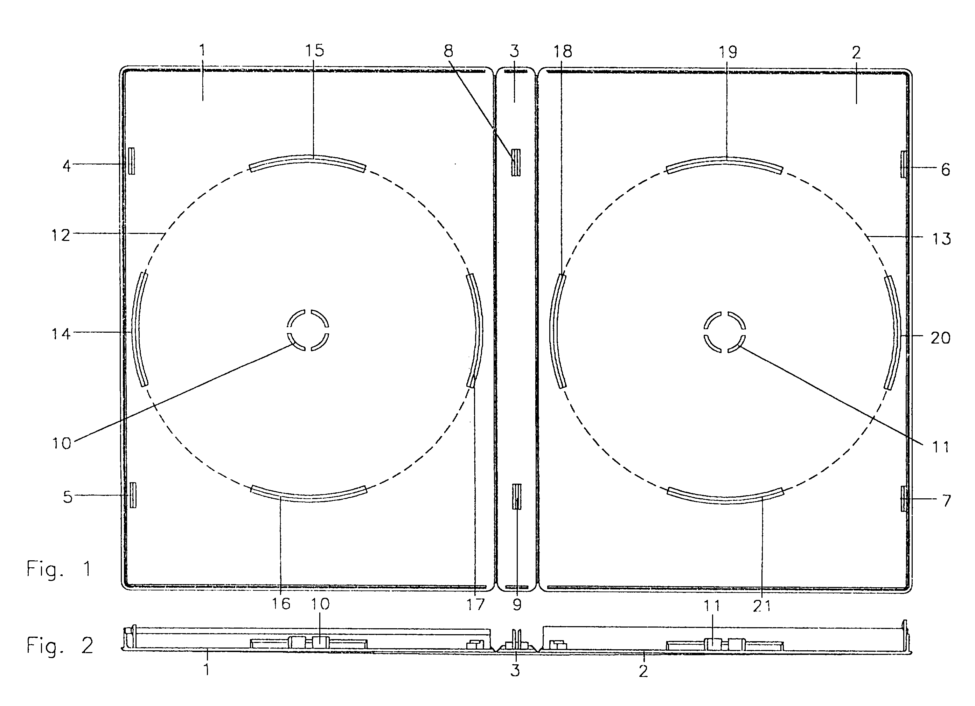

Figure 1 shows a top view of a case made in accordance with the present invention in the unfolded or opened position.

Figure 2 shows a cross section of the case itself.

Figure 3 shows a section of the case itself in the closed position.

Figure 4 shows a cross-section of the case across the part of the articulation thereof, showing the tabs for holding the brochure in place.

Figure 5 shows a detail of the cross-section of the case.

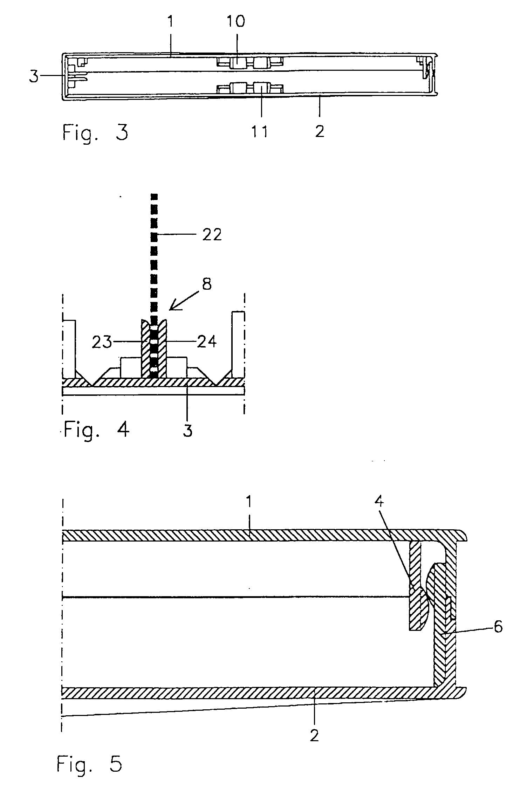

The construction of a case for DVD video disks, which is the object of the present invention, includes the constitution of two elements articulated together -1- and -2-, which respectively form the two halves of the case with a flat parallelepiped-shaped construction, preferably with a square section, and which are joined together by means of a smaller intermediate wall -3-, possessing a set of elements for holding down the parts or elements -1- and -2- of the case, formed, for example, by the tabs -4- and -5- of the element -1-, used for making the corresponding elements -6- and -7- of the element -2- coincide with each other by pressure or other retention means in order to allow the case to close in the position shown in Figure 3.

In accordance with the present invention, on the inner face of elements -1- and -2- which make up the case, two rosette like protrusions -10- and -11- are formed for holding two DVD video disks into place, as indicated with dotted lines -12- and -13-. In order to improve the centring for the said disks, both element -1- and element -2- shall present a number of outstanding sectors with a variable number, such as those shown with the number -14-, -15-, -16- and -17- for element -1- of the case, which are aimed to receive at their edge the disk fitted into the respective rosette like protrusion.

The shape of the said sectors is stepped, in such a way that they can receive the corresponding area of the edge of the disk, which rests axially over the step and which simultaneously is limited in a radial direction by the latter, thereby achieving the proper centring for the disk. In the element -2- of the case, a similar structure is formed by the sectors -18-, -19-, -20- and -21-.

In accordance with the present invention, on the wall -3- for joining together the parts -1- and -2- of the case a variable number of tabs are arranged along its central axis, such as those shown with the numbers -8- and -9-, aligned with one another and arranged perpendicularly to the said face -3-, as may be seen in Figure 4, allowing a brochure -22- to be held in place attached by the said tabs, in an arrangement perpendicular to the aforementioned face -3-. The said tabs shall have a variable structure, with their objective being exclusively that of holding the brochure in place with a slight amount of pressure, in such a way that it will be easy to introduce it in a direction perpendicular to the articulating face -3- and so that it may be removed simply by softly pulling the brochure in order to remove it from the said tabs. For this reason, the specific shape of the tabs as well as the number thereof shall not be essential for the present invention. However, the preferential construction has been shown that may be seen in Figure 4 in which the tab -8- is formed by two flat tabs parallel to one another -23- and -24- separated by an gap smaller that the thickness of the brochure -22-, therefore given the elasticity of the material from which the tabs are made, fast and easy attachment and removal of the brochure for the DVD video disk are made possible inside the said tabs. With the exception of the aforementioned arrangement of the tabs for holding down the explanatory brochure for the DVD video disk, the rest of the features of the case may be conventional.

Although, by way of a preferential example, the case has been shown in a version in which it presents the means for holding down a DVD video disk on each one of its faces, the invention also envisages the version according to which the centring devices for the DVD video disk are located only on one of the faces, with the other one being completely smooth and with the case being used in this case for receiving and storing one single DVD video disk.

As shall be seen, by means of the said constitution, it is possible to fit two DVD video disks in a single case with the standard sizes, which is achieved by the characteristics of the present invention.

The characteristics of the invention have been well defined in the preceding explanation which, nevertheless, only appears by way of an example and into which variations may be introduced that will not alter the essential nature of the appended claims.

## Claims

1. Case for DVD video disks, of the type which comprises two elements in the form of a square, very flat parallelepiped container portion, articulated together by means of a smaller intermediate face, characterized in that both elements forming the case each have on their inside face the means for centring and holding a DVD video disk each, complemented by nerves for the centring on the edge of the disks mounted on each one of them, with the said smaller face having holding means arranged along its inside used for holding down an explanatory brochure that is to be held therein, with the brochure remaining in an intermediate position between the container portion and the cover.

2. Case for DVD video disks, according to claim 1, characterized in that the nerves for the centring of the edge of each disk are formed by a number of circular sectors that are concentric to the disk.

3. Case for DVD video disks, according to claim 2, characterized in that the circular centring sectors for the edge of the disks have a stepped cross-section, thereby providing both radial and axial centring for the disk.

4. Case for DVD video disks, according to claim 1, characterized in that the means for holding the brochure are arranged in alignment with the longitudinal center line of the face joining the container portions and the cover of the case.

5. Case for DVD video disks, according to claim 2, characterized in that the holding means includes a pair of small flat tabs perpendicular to the intermediate face for joining the container portion and the cover with elastics characteristics and with a separation slightly smaller than the thickness of the brochure which is to be attached, in order to allow the introduction of the said brochure and the attachment thereof by means of the elasticity of the elements of the tab.
